# EUROPÄISCHE PATENTSCHRIFT

(11) **EP 1 361 644 B1**
(45) Veröffentlichungstag und Bekanntmachung des Hinweises auf die Patenterteilung: **28.10.2009**
(21) Anmeldenummer: 03008672.2
(22) Anmeldetag: 16.04.2003
(51) Int. Cl.: H02K 5/22, H02K 11/04

(54) **Elektronisch kommutierter Gleichstrommotor**
Brushless motor
Moteur sans balais

(30) Priorität: 07.05.2002 DE 20207233 U
(43) Veröffentlichungstag der Anmeldung: 12.11.2003
(73) Patentinhaber: ebm-papst Mulfingen GmbH & Co. KG, 74673 Mulfingen (DE)
(72) Erfinder: Best, Dieter, 74653 Ingelfingen (DE); Futterlieb, Gerd, Dipl.-Ing. (FH), 74423 Obersontheim (DE); Spitznagel, Sabine, 74673 Mulfingen-Ailringen (DE); Ströbel, Othmar, 74572 Blaufelden (DE)
(74) Vertreter: Patentanwälte Dr. Solf & Zapf

(56) Entgegenhaltungen:
- WO-A-01/28074
- DE-A- 10 113 559
- US-A1- 2002 053 843
- US-B1- 6 278 207
- US-B1- 6 333 576

## Beschreibung

Die vorliegende Erfindung betrifft einen elektronisch kommutierten Außenläufer-Gleichstrommotor, mit einem Stator und einem den Stator umschließenden mit Permanentmagneten versehenen Rotor, wobei ein zentrisch innerhalb des Stators angeordnetes Lagertragrohr in seinem Innern die Welle des Rotors aufnimmt und auf der dem Rotor abgewandten Seite in ein quer zur Motorwelle verlaufendes, die Leiterplatte mit Steuer-, Regel- bzw. Kommutierungselektronik aufnehmendes und mit einem Deckel verschlossenen Elektronikgehäuse übergeht, dessen Boden von die Wicklung und Leiterplatte miteinander verbindenden Anschlusselementen durchgriffen wird, wobei die Anschlusselemente an einer stirnseitigen, den Wickelkopf der Statorwicklungen gegenüber dem Statorblechpaket isolierenden Kunststoffschicht des Stators befestigt sind.

Ein derartiger Elektromotor ist aus der DE 41 22 529 A1 bekannt. Dieser Motor weist einen Träger für eine die Steuermittel für die Kommutierung aufweisende Leiterplatte auf, die sich auf der vom Rotor abgewandten Seite des Trägers quer zur Rotordrehachse erstreckt. Der Träger für die Leiterplatte ist flanschartig ausgebildet und von einem Ringrand umgeben und mittels eines Deckels verschließbar. Dieser Flansch weist zumindest einen Durchbruch auf, der von dem die Steuermittel aufnehmenden Raum zur Rotorseite führt und von Anschlusselementen durchsetzt ist, die die Wicklungen des Stators mit der Leiterplatte verbinden.

Bei dieser Anordnung von Motor und Leiterplatte besteht das Problem, dass Feuchtigkeit, die sich z.B. durch Kondensation bilden kann, vom Motorbereich in den Elektronikbereich eintreten kann, da geeignete Dichtmittel an den von den Anschlusselementen durchgriffenen Durchbrüchen der Trägerplatte, die die Bodenscheibe des Elektronikgehäuses bildet, nicht vorgesehen sind. Das Problem der fehlenden Abdichtung wird noch dadurch verschärft, als es sich bei dem dargestellten Motor um einen Außenläufermotor handelt, bei dem über den Luftspalt zwischen Stator und Rotor Wasser bzw. Feuchtigkeit eindringen kann.

Das Dokument US 6 278 207 B1 beschreibt einen ähnlichen Motor mit entsprechendem Grundaufbau einschließlich eines Elektronikgehäuses. Der Stator ist im Bereich seines Wickelkopfes mit synthetischem Harz beschichtet, wobei diese Beschichtung teilweise entfernt ist, um einen Anschlussverbinder auszusparen. Außerdem ist das Elektronikgehäuse (chamber) mit einer Füllmasse gefüllt (vergossen). Weitere Abdichtelemente sind in diesem Dokument nicht offenbart. Insoweit entspricht die Beschichtung im Bereich des Wickelkopfes im Grunde nur der isolierenden Kunststoffschicht des Stators gemäß dem zuvor erläuterten Dokument DE 41 22 529 A1.

In dem Dokument WO 01/28074 A2 ist ein weiterer ähnlicher Außenläufermotor gemäß Präambel von Anspruch 1 beschrieben, der ebenfalls auf einer Seite des Stators im Anschluss an den Wickelkopf ein Elektronikgehäuse aufweist. Dabei ist offenbart, dass ein elektrischer Anschlussverbinder durch eine Öffnung einer Basisplatte des Elektronikgehäuses geführt und mit einer Gummidichtung oder dergleichen abgedichtet ist.

Der Erfindung liegt nun die Aufgabe zugrunde, einen Außenläufermotor der gattungsgemäßen Art so zu verbessern, dass eine kostengünstige und sichere Abdichtung des die Steuermittel für die Elektronik tragenden Gehäuses gewährleistet ist.

Diese Aufgabe wird durch die Merkmale des unabhängigen Anspruchs 1 gelöst. Vorteilhafte Ausgestaltungsmerkmale sind in den abhängigen Ansprüchen enthalten. Ein erstes Abdichtelement ist zwischen der dem Wickelkopf zugewandten Seite der Bodenscheibe des Elektronikgehäuses und dem Wickelkopf des Elektromotors vorgesehen, das zumindest den Bereich der Durchbrüche der Bodenscheibe des Elektronikgehäuses abdichtet.Ein zweites Abdichtelementdichtet den Bereich der Fügespalte zwischen den Anlageflächen des Deckels und dem Elektronikgehäuse ab, wobei das zweite Abdichtelement bevorzugt so ausgebildet ist, dass es neben der Funktion der Abdichtung gleichzeitig auch zur Aufnahme von elektrischen Kontaktmitteln zum Verbinden des Motors mit der Versorgungsspannung ausgebildet ist.

Das erste Abdichtelement für die Durchbrüche der Bodenscheibe besteht aus einer im Wesentlichen scheibenförmigen eine gewisse Dicke aufweisenden Kunststoffscheibe, die einerseits als Wickelkopfschutz zur Isolation der Wicklung gegenüber dem Elektronikgehäuse dient und andererseits den Bereich der Durchbrüche der Bodenscheibe des Elektronikgehäuses abdichtet. Hierzu weist das erste Abdichtelement im Bereich der Durchbrüche der Bodenscheibe Taschen auf, die neben der Abdichtung auch zur Führung und genauen Positionierung der Anschlusselemente des Motors dienen.

Das zweite Abdichtelement dichtet das Elektronikgehäuse im Bereich des Deckels gegenüber eindringender Feuchtigkeit ab und dient gleichzeitig durch stegartige Ansätze dazu, die Leiterplatte über ein Isolationselement an die innere Bodenseite des Elektronikgehäuses anzudrücken. Dies führt zu einer verbesserten Wärmeableitung der elektronischen Bauteile auf das Elektronikgehäuse. Gleichzeitig dient das zweite Abdichtelement auf seiner dem Stator zugewandten Seite zur Aufnahme von elektrischen Kontaktmitteln, die zur Verbindung der Leiterplatte mit dem Motoranschlusskabel dienen.

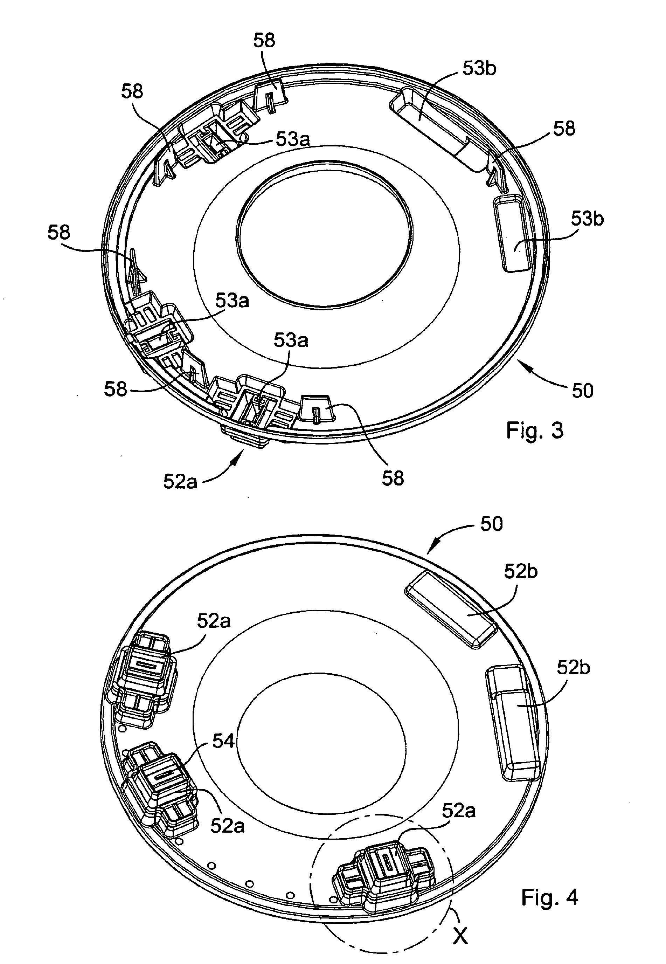

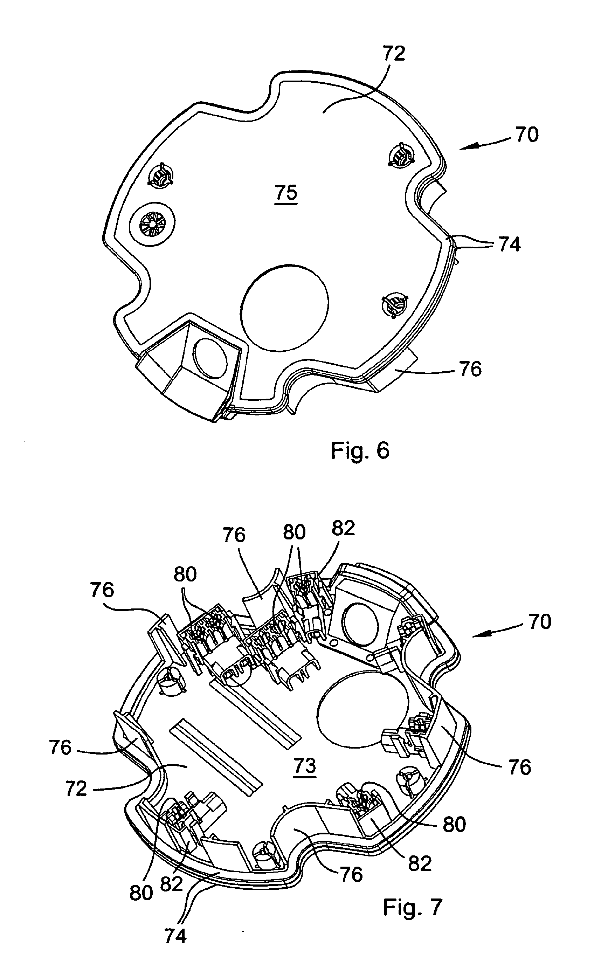

Die Erfindung wird im folgenden an Hand der beiliegenden Figuren 1 bis 8 näher dargestellt und erläutert, wobei gleiche Teile stets mit den gleichen Bezugszeichen bezeichnet sind.

So zeigt die
- Fig. 1: einen Axialschnitt durch einen erfindungsgemäßen Motor
- Fig. 2: einen Schnitt gemäß II - II in Fig. 1
- Fig. 3: eine Aufsicht auf das erste Abdichtelement von der Seite des Stators aus betrachtet
- Fig. 4: eine Aufsicht auf die der Fig. 3 gegenüberliegende Seite des ersten Abdichtelements
- Fig. 5: eine Einzelheit X gemäß Fig. 4 im Bereich der Aufnahmetaschen
- Fig. 6: eine Aufsicht auf das zweite Abdichtelement vom abgenommenem Deckel des Elektronikgehäuses aus betrachtet
- Fig. 7: eine Aufsicht auf die der Fig. 6 gegenüberliegenden Seite des zweiten Abdichtelements
- Fig. 8: eine Explosionsdarstellung des gesamten Statoraufbaus des Motors

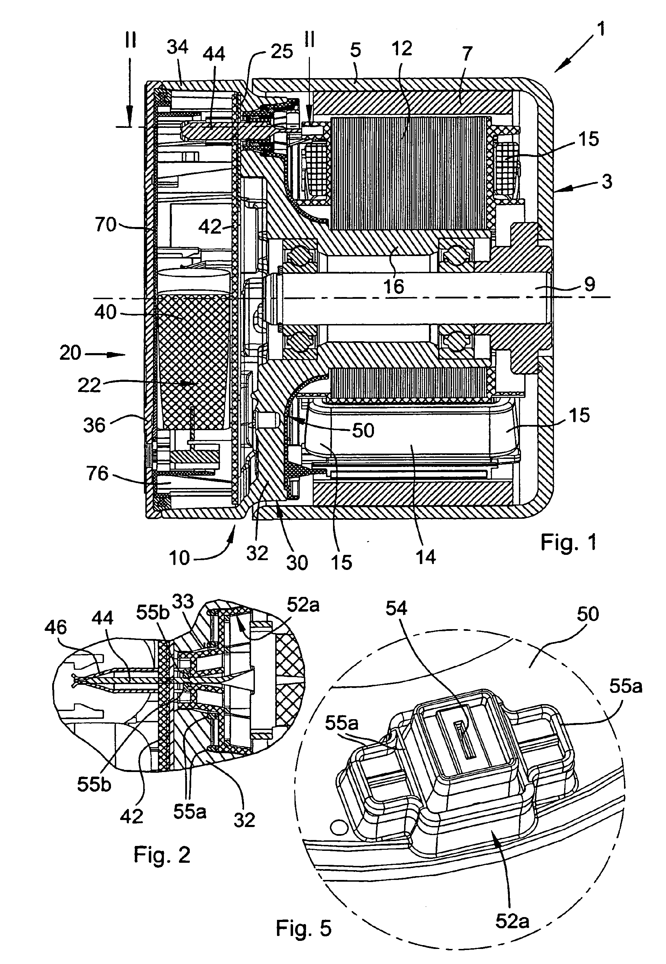

In Figur 1 ist ein Axialschnitt eines erfindungsgemäßen elektronisch kommutierten Außenläufergleichstrommotors 1 dargestellt. Er besteht aus einem Stator 10 und einem den Stator 10 topfförmig übergreifenden Rotor 3, mit einer Welle 9, die im Zentrum des Stators 10 über im Abstand zueinander angeordnete Lagerelemente mit dem Stator 10 verbunden ist. Der Rotor 3 wird in bekannter Weise aus einem topfförmigen Rückschlussring 5 gebildet, der an seiner inneren Umfangswand Permanentmagnete 7 trägt.

Der Stator 10 besteht aus einem mit einer Statorwicklung 14 bewickelten Statorblechpaket 12, das den Magneten 7 des Rotors 3 radial gegenüberliegt und auf einem Lagertragrohr 16 im Innern des Statorblechpaketes 12 befestigt ist sowie aus einem einstückig mit dem Lagertragrohr 16 verbundenen, die Steuermittel 22 für den Motor 1 enthaltenden Elektronikgehäuse 20.

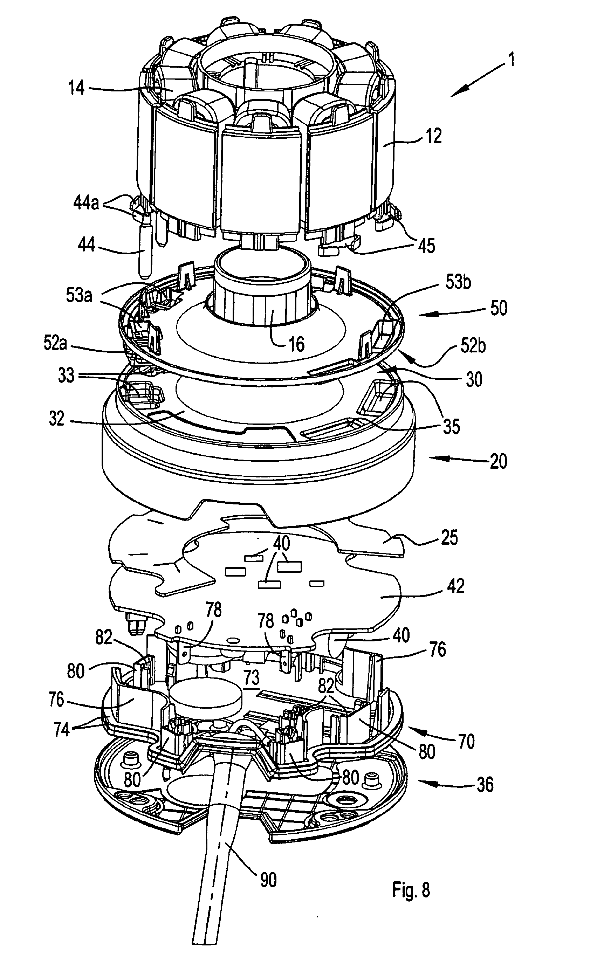

Wie insbesondere aus den Figuren 1 und 8 deutlich wird, geht das Lagertragrohr 16 auf der dem Rotor 3 abgewandten Seite in eine kreisförmige, radial ausgerichtete Bodenscheibe 30 über, die als Flanschteil das Bodenteil 32 eines Elektronikgehäuses 20 bildet. Das Bodenteil 32 weist an seinem Außenrand einen axial verlaufenden, umlaufenden Ringrand 34 auf, der zusammen mit einem Gehäusedeckel 36 ein Gehäuse 20 für eine mit elektronischen Bauelementen 40 bestückte Leiterplatte 42 für Kommutierungs- bzw. Steuermittel 22 bildet. Der umlaufende Ringrand 34 setzt sich in axialer Verlängerung des Rotors 3 fort.

Die elektronischen Bauelemente 40 sind auf der Leiterplatte 42 im Innenraum 38 des Elektronikgehäuses 20 im Bereich des Bodes 32 befestigt. Dabei ist die Leiterplatte in der Regel beidseitig bestückt, wobei die kleineren Bauelemente auf der dem Boden 32 zugewandten Seite der Leiterplatte 42 befestigt sind. Hierzu weist die Innenseite des Bodens 32 entsprechende Vertiefungen bzw. Aussparungen auf.

Die Befestigung der Leiterplatte 42 erfolgt hierbei einerseits über die elektrischen Kontaktfahnen 44, die den Boden 32 des Elektronikgehäuses 20 an mehreren Stellen durchgreifen, um die Statorwicklung 14 mit Kontaktmitteln 46 der Leiterplatte 42 zu verbinden (siehe hierzu Fig. 2) sowie andererseits über das zweite Abdichtelement 70, das nach dem Einsetzen der Leiterplatte 42 in das Elektronikgehäuse 20 zwischen Deckel 36 und elektronischen Bauelementen 40 eingefügt wird. Das zweite Abdichtelement 70, das später noch beschrieben wird, weist an seinem Randbereich axiale in Richtung des Stators 10 weisende Stege 76 auf, mittels denen die Leiterplatte 42 an die Innenseite des Bodenteils 32 angedrückt wird. Nach Verschließen des Deckels 36 mittels Schrauben ist die Leiterplatte 42 fixiert.

Zur elektrischen Verbindung zwischen Stator 10 und Elektronikgehäuse 20 dienen, wie oben bereits angesprochen, je nach Wicklungsart bzw. Strangzahl mindestens zwei als Anschlusselemente dienende Kontaktfahnen 44, im vorliegenden Fall drei Kontaktfahnen 44, die auf der dem Rotor 3 abgewandten Seite in Öffnungen eines auf der Stirnseite mit Kunststoff umspritzten Statorblechpaketes 12 eingesetzt sind und axial hervorstehen. Die Kontaktfahnen 44 weisen dabei dicht am Statorbereich, seitliche Fortsätze 44a auf, an denen die Enden der Statorwicklung 14 z.B. mittels Pressschweißen befestigt sind. Es können weitere Verbindungselemente 45 vorhanden sein, die lediglich zur internen Verschaltung der einzelnen Statorwicklungen 14 untereinander dienen, die jedoch nicht in das Elektronikgehäuse 20 geführt sind. Die freien Enden der Kontaktfahnen 44 durchgreifen Öffnungen 33 des Bodens 32 des Elektronikgehäuses 20 und der Leiterplatte 42, wie dies im Einzelnen in Fig. 2 dargestellt ist, und kontaktieren die Kontaktzungen 46 auf der Leiterplatte 42 auf der dem Stator abgewandten Seite des Motors 1.

Zwischen dem scheibenförmigen Teil 30 des Bodenteils 32 und dem Stator 10, insbesondere den Statorwicklungen 14, ist das erste Abdichtelement 50 eingefügt, insbesondere auf das Lagertragrohr 16 aufgeschoben. Dieses Abdichtelement 50 wird von den oben angesprochenen Kontaktfahnen 44 durchdrungen, wobei sowohl der Durchführungsbereich im Bereich der Öffnungen 33 des Bodenteils 32 als auch die einzelnen Kontaktfahnen 44 selbst gegen eindringende Feuchtigkeit abgedichtet sind. Es besteht aus einer im Wesentlichen kreisförmigen, der Kontur des scheibenförmigen Teils 32 nachempfundenen Kunststoffscheibe mit einer zentrischen, dem Lagertragrohr 16 angepassten Öffnung und mehreren in Richtung des Elektronikgehäuses verlaufenden Erhebungen 52a und 52b, die von der Seite des Stators 10 aus betrachtet, taschenartige Hohlräume 53a und 53b bilden. Die Erhebungen 52a sind terrassenförmig ausgebildet und weisen jeweils einen Schlitz 54 zur Durchführung der Kontaktfahnen 44 auf. Sie dienen einerseits zur Führung und genauen Positionierung der Kontaktfedern 44 und andererseits auf ihrer dem Stator zugewandten, taschenförmigen Seite, zur Aufnahme der seitlichen Kontaktfeder-Fortsätze 44a, an denen die Wicklungsdrähte befestigt sind. Um die angesprochene Dichtwirkung zu erreichen, weisen die terrassenartigen Erhebungen 52a gemäß Fig. 2 und 5 umlaufende Dichtlippen 55a bzw. 55b auf, die einerseits zur Abdichtung gegenüber den Öffnungen 33 des Bodenteils 32 vorgesehen sind, als auch zur Abdichtung im Bereich der Kontaktfahnen 44. Vorteilhafter Weise bestehen diese Dichtmittel aus einem Zweikomponenten Teil, wobei an den abzudichtenden Bereichen eine als Dichtlippe wirkende Weichkomponente 55a bzw. 55b an das Kunststoffteil angespritzt ist.

Die weiteren taschenartigen Hohlräume 53b sind mit Ausnahme ihrer dem Stator 10 zugewandten Öffnungen vollständig geschlossen und dienen zur Aufnahme der Verbindungselemente 45, die zur Verschaltung der Statorwicklungen 14 vorgesehen sind.

Durch die besondere Ausgestaltung des Abdichtelements 50 mit taschenartigen Hohlräumen 53a, 53b auf der dem Stator 10 zugewandten Seite der Kunststoffscheibe, tauchen sämtliche die Statorwicklung betreffenden Verbindungsmittel 45 sowie die Fortsätze 44a in die taschenförmigen Aufnahmen 53a und 53b ein, so dass sich die Kunststoffscheibe in unmittelbarer Nähe der Statorwicklung befindet und den Wickelkopf 15 der Statorwicklung 14 abdeckt. Dabei stützt sie sich am Außenrand des Stators 10 über mehrere umfangsseitig angebrachte Stege 58 ab. Diese Anordnung der Kunststoffscheibe dient sowohl zur elektrischen Isolation gegenüber dem den Motorflansch bildenden Bodenteil 32 als auch dem mechanischen Wickelkopfschutz.

Um die Anlage der als erstes Abdichtelement 50 dienenden Kunststoffscheibe an das Bodenteil 32 zu ermöglichen, weist die Bodenscheibe 30 auch im Bereich der taschenartigen Erhebungen 52b den Erhebungen 52b angepasste sacklochartige Vertiefungen 35 auf, in die die Erhebungen 52b eintauchen. Es ergibt sich somit eine Parallellage von Bodenteil 32 und der als Abdichtelement 50 dienenden Kunststoffscheibe.

Das zweite Abdichtelement 70 besteht im Wesentlichen aus einer ebenen, etwa kreisförmig ausgebildeten Abdeckplatte 72 aus isolierendem und wärmeleitenden Kunststoff, mit einer umlaufenden Dichtlippe 74 zur Abdichtung des Deckelbereiches zum einen gegenüber dem umlaufenden Ringrand 34 des Elektronikgehäuses 20 und zum andern gegenüber dem das Elektronikgehäuse 20 dicht verschließenden Deckel 36. Die Dichtlippe 74 wird ebenfalls wie vorstehend bereits geschildert, durch ein Zweikomponenten Material gebildet, wobei eine Weichkomponente des Materials als Dichtelement dient.

Die als zweites Abdichtelement 70 dienende Abdeckplatte 72 weist mehrere axial am Umfangsrand angeordnete in Richtung zum Bodenteil 32 des Elektronikgehäuses 20 weisende und sich auf Randbereichen der Leiterplatte 42 abstützende Stege 76 auf. An seiner Innenseite 73 sind erfindungsgemäß auch Halte- und Befestigungsmittel für Kontaktelemente 82 zum Verbinden des Motors mit einem Anschlusskabel 90 bzw. einem Anschlussstecker vorgesehen. Hierzu sind an der Innenseite 73 der Abdeckplatte 72 mehrere Aufnahmetaschen 80 für Steckverbinderelemente angespritzt, in denen die Verbindungs- bzw. Kontaktmittel 82 untergebracht sind. Diese Kontaktmittel 82 dienen auch zur Aufnahme entsprechend angeordneter Gegenkontaktelemente 78 auf der Leiterplatte 42. Mit dem Einsetzen des zweiten Abdichtelementes 70, ist es auf diese Weise möglich, neben der Abdichtung des Elektronikgehäuses 20, gleichzeitig auch die Herstellung der elektrischen Anschlussverbindungen, zu erreichen. Mit dem Anschrauben des Gehäusedeckels 36 ist dann das Elektronikgehäuse 20 dicht verschlossen. Durch die Planlage der Außenseite 75 des zweiten Abdichtelementes 70 mit dem Gehäusedeckel 36, kann die innerhalb des Elektronikgehäuses 20 entstehende Wärme in effizienter Weise über den Gehäusedeckel 36 an die Umgebung abgeführt werden.

Die Montage des Motors erfolgt nun derart, dass auf den bewickelten, intern über die Verbindungselemente 45 verschalteten und mit Kontaktfahnen 44 versehenen Elektromotor 1 das erste Abdichtelement 70 aufgeschoben wird, wobei die Kontaktfahnen 44 das erste Abdichtelement 70 durchgreifen. Nun wird in bekannter Weise das Lagertragrohr 16 mit dem als Motorflansch dienenden Elektronikgehäuse 20 in den Innenraum des Statorblechpaketes 12 eingepresst und nach Einfügen der Lagerelemente der Rotor 3 des Außenläufermotors montiert.

Die Kontaktfahnen 44 durchgreifen nun den Boden des Elektronikgehäuses 20 und stehen dabei im Innenraum des Gehäuses zur Verfügung. Auf diese Kontaktfahnen 44 wird nun die mit Steuermitteln versehene Leiterplatte 42 unter Zwischenlage eines Isolationsteiles 25, insbesondere eines wärmeleitfähigen Teils wie. z. B. einem sogenannten Gadpad aufgesteckt. Anschließend wird das zweite Abdichtelement 70 eingefügt, und drückt mit seinen umfangsseitigen axial gerichteten Stegen 76 auf den Randbereich der Leiterplatte 42, wodurch diese an den Boden des Elektronikgehäuses 20 angedrückt wird. Mit dem Einsetzen des zweiten Abdichtelementes 70 wird gleichzeitig die elektrische Verbindung zwischen Leiterplatte 42 und Motoranschlusskabel 90 hergestellt. Das Elektronikgehäuse 20 ist nun auf Grund der umlaufenden Dichtlippe 74 an seinem Umfangsrand abgedichtet. Nun wird der Gehäusedeckel 36 aufgesetzt und mittels nicht näher dargestellter Schrauben an seitlich am Ringrand 34 vorgesehenen Gewindebohrungen befestigt. Auf Grund der umlaufenden Dichtlippe 74 erfolgt nun eine Abdichtung des Deckelbereiches.

## Patentansprüche

1. Elektronisch kommutierter Außenläufer-Gleichstrommotor (1), mit einem Stator (10) und einem den Stator (10) umschließenden, mit Permanentmagneten (7) versehenen Rotor (3), wobei ein zentrisch innerhalb des Stators (10) angeordnetes Lagertragrohr (16) in seinem Innern die Welle (9) des Rotors (3) aufnimmt und auf der dem Rotor (3) abgewandten Seite in ein quer zur Motorwelle (9) verlaufendes, die Leiterplatte (42) mit Steuer-, Regel- bzw. Kommutierungselektronik (22) aufnehmendes mit einem Gehäusedeckel (36) verschlossenes Elektronikgehäuse (20) übergeht, dessen Boden (30) von die Wicklung (14) und Leiterplatte (42) miteinander verbindenden Anschlusselementen (44) durchgriffen wird, wobei die Anschlusselemente (44) an einer stirnseitigen, den Wickelkopf (15) der Statorwicklungen (14) gegenüber dem Statorblechpaket (12) isolierenden Kunststoffschicht des Stators (10) befestigt sind, wobei
a) ein erstes, zwischen Wickelkopf (15) und Bodenscheibe (30) des Elektronikgehäuses (20) angeordnetes Abdichtelement (50) zumindest die von Anschlusselementen (44) durchgriffenen Öffnungen (33) des Bodenteils (32) des Elektronikgehäuses (20) abdichtet,
b) ein zweites Abdichtelement (70) die Fügespalte zwischen den Anlageflächen des Gehäusedekels (36) und dem Elektronikgehäuse (20) dicht verschließt, **dadurch gekennzeichnet, dass**
c) das zweite Abdichtelement zur Aufnahme von elektrischen Kontaktmitteln (82) zum Verbinden des Motors (1) mit der Versorgungsspannung ausgebildet ist, und
d) das erste Abdichtelement (50) aus einer kreisförmigen Scheibe aus Kunststoff besteht und über eine Öffnung vom Lagertragrohr (16) durchgriffen wird und auf der einen Seite mehrere Erhebungen (52a , 52b) aufweist, die auf der anderen Seite taschenartige Hohlräume (53a , 53b) bilden.

2. Motor nach Anspruch 1, **dadurch gekennzeichnet, dass** die Erhebungen (52a) jeweils einen Schlitz (54) zur Durchführung je einer Kontaktfahne (44) aufweisen.

3. Motor nach Anspruch 1 oder 2, **dadurch gekennzeichnet, dass** die Erhebungen (52a), (52b) auf der dem Elektronikgehäuse (20) zugewandten Seite und die taschenartigen Hohlräume (53a), (53b) auf der dem Stator (10) zugewandten Seite des ersten Abdichtelements (50) angeordnet sind.

4. Motor nach einem der Ansprüche 1 bis 3, **dadurch gekennzeichnet, dass** die Erhebungen (52a) zur Abdichtung gegenüber den Öffnungen (33) des Bodenteils (32) umlaufende Dichtlippen (55a) aufweisen.

5. Motor nach einem der Ansprüche 1 bis 4, **dadurch gekennzeichnet, dass** die Erhebungen (52a) zur Abdichtung gegenüber den sie durchgreifenden Kontaktfahnen (44) umlaufende Dichtlippen (55b) aufweisen.

6. Motor nach einem der Ansprüche 1 bis 5, **dadurch gekennzeichnet, dass** die Bodenscheibe (30) des Elektronikgehäuses (20) den Erhebungen (52a) des ersten Abdichtelementes (50) angepasste Öffnungen (33) aufweist, die von diesen durchgriffen und mittels der Dichtlippen (55a) abgedichtet werden.

7. Motor nach Anspruch 6, **dadurch gekennzeichnet, dass** die Erhebungen (52a) terrassenförmig ausgebildet sind.

8. Motor nach einem der Ansprüche 1 bis 7, **dadurch gekennzeichnet, dass** die zur Verschaltung der einzelnen Statorwicklungen dienenden Verbindungsmittel (45) sowie die seitlichen Fortsätze (44a) der Anschlusselemente (44) in die taschenartigen Hohlräume (53a), (53b) eintauchen.

9. Motor nach einem der Ansprüche 1 bis 8, **dadurch gekennzeichnet, dass** die Bodenscheibe (30) des Elektronikgehäuses (20) sacklochartige Vertiefungen (35) aufweist, in die die Erhebungen (52b) des ersten Abdichtelementes (50) eintauchen.

10. Motor nach einem der Ansprüche 1 bis 9, **dadurch gekennzeichnet, dass** sich das erste Abdichtelement (50) am Außenrand des Stators (10) mittels mehrerer umfangsseitig angebrachter Stege (58) abstützt und sowohl die elektrische Isolation zwischen Wickelkopf (15) und Bodenteil (32) als auch den mechanischen Wickelkopfschutz bildet.

11. Motor nach einem der Ansprüche 1 bis 10 **dadurch gekennzeichnet, dass** das zweite Abdichtelement (70) im Wesentlichen aus einer ebenen Abdeckplatte (72) aus isolierendem Kunststoff besteht, die zur Abdichtung der Fügespalte zwischen Gehäusedeckel (36) und umlaufendem Ringrand (34) des Elektronikgehäuses (20) eine umlaufende Dichtlippe (74) aufweist.

12. Motor nach einem der Ansprüche 1 bis 11, **dadurch gekennzeichnet, dass** das zweite Abdichtelement (70) mehrere axial am Umfangsrand angeordnete, in Richtung zum Bodenteil (32) des Elektronikgehäuses (20) weisende und sich auf Randbereichen der Leiterplatte (42) abstützende Stege (76) aufweist.

13. Motor nach Anspruch 11 oder 12, **dadurch gekennzeichnet, dass** an der Innenseite (73) der Abdeckplatte (72) Halte- und Befestigungsmittel für Kontaktelemente (82) vorgesehen sind, die in entsprechende Gegenkontaktelemente (78) auf der Leiterplatte (42) eingreifen.

14. Motor nach einem der Ansprüche 1 bis 13, **dadurch gekennzeichnet, dass** mit dem Einsetzen des zweiten Abdichtelementes (70) in das Elektronikgehäuse (20) die elektrische Anschlussverbindung zwischen Anschlusskabel (90) bzw. Anschlussstecker und den Steuermitteln des Motors erfolgt.

15. Motor nach einem der Ansprüche 1 bis 14, **dadurch gekennzeichnet, dass** ein Gehäusedeckel (36) das Elektronikgehäuse (20) dicht verschließt, wobei die im Elektronikgehäuse (20) entstehende Wärme durch Planlage von Gehäusedeckel (36) und Außenseite (75) des zweiten Abdichtelementes (70) auch über den Gehäusedeckel (36) an die Umgebung abgeführt wird.

16. Motor nach einem der Ansprüche 1 bis 15, **dadurch gekennzeichnet, dass** die ersten und zweiten Abdichtelemente (50,70) aus einem Zweikomponenten Kunststoffteil bestehen, wobei an den abzudichtenden Bereichen eine als Dichtlippe wirkende Weichkomponente an das Kunststoffteil angespritzt ist.

## Claims

1. An electronically commutated external-rotor direct-current motor (1), with a stator (10) and a rotor (3) enclosing the stator (10) and provided with permanent magnets (7), wherein a bearing support tube (16) arranged centrally inside the stator (10) receives the shaft (9) of the rotor (3) in its interior and merges on the side facing away from the rotor (3) into an electronics housing (20), which extends transversely to the motor shaft (9) and receives the printed-circuit board (42) with a control, regulating and commutation electronic system (22) and which is closed with a housing cover (36) and the base (30) of which is traversed by attachment elements (44) connecting the winding (14) and the printed-circuit board (42) to each other, wherein the attachment elements (44) are fastened to a plastics-material coating - located on an end face and insulating the winding head (15) of the stator windings (14) from the stator iron core (12) - of the stator (10), wherein
a) a first sealing element (50) arranged between the winding head (15) and the base plate (30) of the electronics housing (20) seals off at least the openings (33) of the base part (32) of the electronics housing (20) which are traversed by attachment elements (44),
b) a second sealing element (70) closes the join between the abutment faces of the housing cover (36) and the electronics housing (20) in a tightly sealed manner, **characterized in that**
c) the second sealing element is designed in order to receive electrical contact means (82) for connecting the motor (1) to the supply voltage, and
d) the first sealing element (50) comprises a circular disc of plastics material and is traversed by the bearing support tube (16) by way of an opening and on one side it has a plurality of raised portions (52a, 52b) which form pocket-like cavities (53a, 53b) on the other side.

2. A motor according to Claim 1, **characterized in that** the raised portions (52a) in each case have a slot (54) for the passage of one respective contact tab (44).

3. A motor according to Claim 1 or 2, **characterized in that** the raised portions (52a), (52b) are arranged on the side of the first sealing element (50) facing the electronics housing (20), and the pocket-like cavities (53a), (53b) are arranged on the side facing the stator (10).

4. A motor according to any one of Claims 1 to 3, **characterized in that** the raised portions (52a) have surrounding sealing lips (55a) for sealing off from the openings (33) of the base part (32).

5. A motor according to any one of Claims 1 to 4, **characterized in that** the raised portions (52a) have surrounding sealing lips (55b) for sealing off from the contact tabs (44) traversing them.

6. A motor according to any one of Claims 1 to 5, **characterized in that** the base plate (30) of the electronics housing (20) has openings (33) which are adapted to the raised portions (52a) of the first sealing element (50) and which are traversed by them and are sealed off by means of the sealing lips (55a).

7. A motor according to Claim 6, **characterized in that** the raised portions (52a) are designed in a terraced manner.

8. A motor according to any one of Claims 1 to 7, **characterized in that** the connecting means (45) used for the circuitry of the individual stator windings as well as the lateral extensions (44a) of the attachment elements (44) dip into the pocket-like cavities (53a), (53b).

9. A motor according to any one of Claims 1 to 8, **characterized in that** the base plate (30) of the electronics housing (20) has depressions (35) like blind bores into which the raised portions (52b) of the first sealing element (50) dip.

10. A motor according to any one of Claims 1 to 9, **characterized in that** the first sealing element (50) is supported on the outer edge of the stator (10) by means of a plurality of webs (58) attached on the periphery and it forms both the electrical insulation between the winding head (15) and the base part (32) as well as the mechanical winding-head protection.

11. A motor according to any one of Claims 1 to 10, **characterized in that** the second sealing element (70) essentially comprises a flat covering plate (72) of insulating plastics material which has a surrounding sealing lip (74) for sealing off the join between the housing cover (36) and the surrounding annular edge (34) of the electronics housing (20).

12. A motor according to any one of Claims 1 to 11, **characterized in that** the second sealing element (70) comprises a plurality of webs (76) arranged axially on the peripheral edge and pointing in the direction towards the base part (32) of the electronics housing (20) and supported on edge regions of the printed-circuit board (42).

13. A motor according to Claim 11 or 12, **characterized in that** retention and fastening means for contact elements (82), which engage in corresponding opposing-contact elements (78) on the printed-circuit board (42), are provided on the inner side (73) of the covering plate (72).

14. A motor according to any one of Claims 1 to 13, **characterized in that** when the second sealing element (70) is inserted into the electronics housing (20) the electrical attachment connexion is formed between the attachment cable (90) or the attachment plug and the control means of the motor.

15. A motor according to any one of Claims 1 to 14, **characterized in that** a housing cover (36) closes the electronics housing (20) in a tightly sealed manner, wherein the heat occurring in the electronics housing (20) is dissipated to the environment by the flat position of the housing cover (36) and the outer side (75) of the second sealing element (70) and also by way of the housing cover (36).

16. A motor according to any one of Claims 1 to 15, **characterized in that** the first and second sealing elements (50, 70) comprise a two-component part of plastics material, wherein a soft component acting as a sealing lip is injection-moulded onto the part of plastics material at the regions to be sealed.

## Revendications

1. Moteur (1) à courant continu à induit extérieur, commuté électroniquement, comportant un stator (10) et un rotor (3) entourant le stator (10) et muni d'aimants permanents (7), ce moteur comprenant un support de coussinet (16) tubulaire, disposé au centre à l'intérieur du stator (10), qui reçoit en son intérieur l'arbre (9) du rotor (3) et se prolonge sur son côté opposé au rotor (3) par un boîtier électronique (20), qui est orienté transversalement à l'arbre (9) du moteur et loge la plaquette de circuits imprimés (42) avec l'électronique de commande, l'électronique de réglage (36) ou l'électronique de commutation (22) et qui est fermé par un couvercle (36) et dont le fond (30) est traversé par des éléments de raccordement (44) reliant entre eux l'enroulement (14) et la plaquette de circuits imprimés (42), lesdits éléments de raccordement (44) étant fixés contre une couche de matière plastique frontale du stator (10), isolant la tête (15) des enroulements (14) du stator par rapport à l'empilement de plaques (12) du stator, sachant que
a) un premier élément d'étanchéité (50), disposé entre la tête (15) des enroulements et le fond (30) du boîtier électronique (20), assure au moins l'étanchéité des orifices traversés par les éléments de raccordement (44) dans la partie de fond (32) du boîtier électronique (20),
b) un deuxième élément d'étanchéité (70) obture de manière étanche la fente de jointure entre les surfaces d'appui du couvercle (36) et le boîtier électronique (20), **caractérisé en ce que**
c) le deuxième élément d'étanchéité est réalisé pour recevoir des moyens de contact (82) électriques pour relier le moteur (1) à la tension d'alimentation, et
d) le premier élément d'étanchéité (50) est formé par une plaque circulaire en matière plastique et est traversé par le support de coussinet (16) tubulaire via un orifice et comporte plusieurs surélévations (52a, 52b) sur un côté et des cavités (53a, 53b) en forme de poches sur l'autre côté.

2. Moteur selon la revendication 1, **caractérisé en ce que** les surélévations (52a) comportent chacune une fente (54) pour laisser passer dans chaque cas une languette de contact (44).

3. Moteur selon la revendication 1 ou 2, **caractérisé en ce que** les surélévations (52a, 52b) sont disposées sur le côté orienté vers le boîtier électronique (20) et les cavités (53a, 53b) en forme de poches sont disposées sur le côté du premier élément d'étanchéité (50), orienté vers le stator (10).

4. Moteur selon l'une quelconque des revendications 1 à 3, **caractérisé en ce que** les surélévations (52a) comportent des lèvres d'étanchéité (55a) périphériques pour assurer l'étanchéité par rapport aux orifices (33) de la partie de fond (32).

5. Moteur selon l'une quelconque des revendications 1 à 4, **caractérisé en ce que** les surélévations (52a) comportent des lèvres d'étanchéité (55b) périphériques pour assurer l'étanchéité par rapport aux languettes de contact (44) qui les traversent.

6. Moteur selon l'une quelconque des revendications 1 à 5, **caractérisé en ce que** le fond (30) du boîtier électronique (20) comporte des orifices (33) qui sont ajustés aux surélévations (52a) du premier élément d'étanchéité (50) et qui sont traversés par lesdites surélévations et sont rendus étanches par les lèvres d'étanchéité (55a).

7. Moteur selon la revendication 6, **caractérisé en ce que** les surélévations (52a) sont réalisées en forme de gradins.

8. Moteur selon l'une quelconque des revendications 1 à 7, **caractérisé en ce que** les moyens de liaison (45), destinés au câblage des différents enroulements du stator, ainsi que les saillies (44a) latérales des éléments de raccordement (44) s'enfoncent dans les cavités (53a, 53b) en forme de poches.

9. Moteur selon l'une quelconque des revendications 1 à 8, **caractérisé en ce que** le fond (30) du boîtier électronique (20) comporte des creux (35) en forme de trous borgnes, dans lesquels s'enfoncent les surélévations (52b) du premier élément d'étanchéité (50).

10. Moteur selon l'une quelconque des revendications 1 à 9, **caractérisé en ce que** le premier élément d'étanchéité (50) prend appui sur le bord extérieur du stator (10) au moyen de plusieurs languettes (58) disposées sur le pourtour, et forme l'isolation électrique entre la tête (15) des enroulements et la partie de fond (32), de même que la protection mécanique de la tête des enroulements.

11. Moteur selon l'une quelconque des revendications 1 à 10, **caractérisé en ce que** le deuxième élément d'étanchéité (70) est formé pour l'essentiel par une plaque de recouvrement (72) plane en matière plastique isolante, laquelle comporte une lèvre d'étanchéité (74) périphérique, destinée à obturer de manière étanche la fente de jointure entre le couvercle (36) et le bord annulaire (34) périphérique du boîtier électronique (20).

12. Moteur selon l'une quelconque des revendications 1 à 11, **caractérisé en ce que** le deuxième élément d'étanchéité (70) comporte plusieurs languettes (76), disposées axialement sur le bord périphérique, orientées vers la partie de fond (32) du boîtier électronique (20) et prenant appui sur les zones du bord de la plaquette de circuits imprimés (42).

13. Moteur selon la revendication 11 ou 12, **caractérisé en ce que** sur la face intérieure (73) de la plaque de recouvrement (72) sont prévus des moyens de retenue et de fixation pour des éléments de contact (82), qui s'engagent dans des éléments de contact complémentaires (78) correspondants sur la plaquette de circuits imprimés (42).

14. Moteur selon l'une quelconque des revendications 1 à 13, **caractérisé en ce que** par la mise en place du deuxième élément d'étanchéité (70) dans le boîtier électronique (20), la liaison électrique s'établit entre le câble de raccordement (90), plus précisément la fiche de raccordement, et les moyens de commande.

15. Moteur selon l'une quelconque des revendications 1 à 14, **caractérisé en ce qu'**un couvercle (36) ferme de manière étanche le boîtier électronique (20), la chaleur générée dans le boîtier électronique (20) étant évacuée vers l'environnement également par l'intermédiaire du couvercle (36) sous l'effet de la planéité du couvercle (36) et de la face extérieure (75) du deuxième élément d'étanchéité (70).

16. Moteur selon l'une quelconque des revendications 1 à 15, **caractérisé en ce que** le premier et le deuxième élément d'étanchéité (50, 70) sont formés par un élément en matière plastique à deux composantes, une composante souple, agissant comme une lèvre d'étanchéité, étant formée par injection sur l'élément en matière plastique au niveau des zones à rendre étanches.
